# EUROPÄISCHE PATENTSCHRIFT

(11) **EP 0 900 342 B1**
(45) Veröffentlichungstag und Bekanntmachung des Hinweises auf die Patenterteilung: **07.08.2002**
(21) Anmeldenummer: 97923827.6
(22) Anmeldetag: 14.05.1997
(51) Int. Cl.: F16D 65/16

(54) **ELEKTROMOTORISCHE BREMSVORRICHTUNG**
ELECTROMOTIVE BRAKING DEVICE
SYSTEME DE FREINAGE A MOTEUR ELECTRIQUE

(30) Priorität: 29.05.1996 DE 19621533
(43) Veröffentlichungstag der Anmeldung: 10.03.1999
(73) Patentinhaber: ROBERT BOSCH GMBH, 70442 Stuttgart (DE)
(72) Erfinder: BLOSCH, Georg, D-71711 Murr (DE); BLATTERT, Dieter, D-74366 Kirchheim (DE)
(86) Internationale Anmeldenummer: DE9700991
(87) Internationale Veröffentlichungsnummer: WO9745653

(56) Entgegenhaltungen:
- EP-A- 0 246 770
- EP-A- 0 275 783
- US-A- 4 546 297
- US-A- 4 602 702
- US-A- 4 760 895
- US-A- 5 123 505
- US-A- 5 322 146

## Beschreibung

### Stand der Technik

Die Erfindung betrifft eine Bremsvorrichtung für ein Fahrzeug mit den Merkmalen des Oberbegriffs des Anspruchs 1.

Eine derartige Bremsvorrichtung ist aus US-A-4 546 297 bekannt. DE-A-42 29 042 offenbart eine weitere Bremsvorrichtung. Diese weist einen Elektromotor auf, der über ein Zahnradgetriebe eine Spindel eines Spindeltriebs rotierend antreibt, der die rotierende Antriebsbewegung in eine Linearbewegung zum Andrücken eines Bremsbelags an eine Bremsscheibe als Bremskörper aufweist. Des weiteren weist die bekannte Bremsvorrichtung eine Notbetätigungseinrichtung auf, mit der sich die Bremsvorrichtung bei Ausfall ihres Elektromotors betätigen läßt. Die bekannte Bremsvorrichtung hat den Nachteil, daß sie keine Möglichkeit zur Nachstellung eines Lüftspiels zwischen Bremsbelag und Bremsscheibe bei zunehmender Bremsbelagsabnutzung aufweist. Infolgedessen wird der Betätigungsweg und damit auch die Zeit, die vom Ingangsetzen bis zum Greifen der Bremse verstreicht, mit zunehmender Abnutzung des Bremsbelags größer. Weiterer Nachteil der bekannten Bremsvorrichtung ist, daß sie sich, bedingt durch die Bauart ihrer Notbetätigungseinrichtung, nicht lösen läßt, wenn ihr Elektromotor oder dessen Stromversorgung bei betätigter Bremse ausfällt.

Aus der EP 0 246 770 A3 ist eine Bremsbetätigungsvorrichtung für eine Eisenbahnbremse bekannt. Diese weist einen ersten Elektromotor auf, der einen ersten Spindeltrieb antreibt, dessen Spindel zum Andrücken eines Bremsschuhs an ein Eisenbahnrad vorgesehen ist. Der erste Elektromotor mit dem ersten Spindeltrieb dient zum Überwinden des Lüftspiels. Desweiteren weist die bekannte Bremsbetätigungsvorrichtung einen zweiten Elektromotor zum Antrieb eines zweiten Spindeltriebs auf, dessen Spindelmutter mit langem Hebelarm an einem einarmigen Hebel angreift, der sich rahmenfest abstützt. Mit kurzem Hebelarm greift der Hebel am ersten Spindeltrieb an, so daß sich der gesamte erste Spindeltrieb über den Hebel mit großer Kraft verschieben läßt. Diese Verschiebebewegung dient zum Aufbringen einer Bremskraft.

Die bekannte Bremsbetätigungsvorrichtung hat den Nachteil, daß sie nicht zum Nachstellen des Lüftspiels ausgebildet ist. Sie hat den weiteren Nachteil, daß sich bei Ausfall ihres ersten Elektromotors das Lüftspiel nicht mehr überwinden läßt und somit keine Bremswirkung mehr erzielbar ist. Weiterer Nachteil der bekannten Bremsbetätigungsvorrichtung ist, daß sich bei Ausfall ihres zweiten Elektromotors nur noch eine minimale Bremskraft mit dem ersten Elektromotor aufbringbar ist und daß sie sich mit der ersten Elektromotor nur lösen läßt, wenn dieser ausreichend stark dimensioniert ist.

Die aus US-A-4 546 297 bekannte Bremsvorrichtung weist zwei Motoren zur Bremsbetätigung auf : einen Motor zur Überwindung des Lüftspiels und einen Motor, um einen Bremsbelag an einen Bremskörper anzudrücken. Dabei erzeugt der letztgenannte Motor nicht die Bremskraft; vielmehr gibt der Motor eine vorgespannte Druckfeder frei, welche eine Betätigungseinrichtung der Bremsvorrichtung antreibt.

Die Arbeitsweise der beiden Motoren erfolgt in gegenseitiger Abhängigkeit: erst wenn bei der Bremsbetätigung das Lüftspiel mittels des erstgenannten Motors überwunden ist, wird der letztgenannte Motor eingeschaltet, der die Druckfeder zum Andrücken des Bremsbelags gegen den Bremskörper freigibt. Beim Bremslösen erfolgen diese Arbeitsschritte in umgekehrter Reihenfolge. Die Steuerung dieser bekannten Bremsvorrichtung ist daher aufwendig und störungsanfällig.

### Vorteile der Erfindung

Die erfindungsgemäße Bremsvorrichtung mit den Merkmalen des Anspruchs 1 weist eine Nachstelleinrichtung mit einem Elektro-Nachstellmotor auf, mit der sich ein vorgesehenes Lüftspiel zwischen Bremsbelag und Bremskörper bei gelöster Bremsvorrichtung einstellen läßt. Auf diese Weise wird ein gleichbleibedes, von der Abnutzung des Bremsbelags unabhängiges Lüftspiel und damit ein gleichbleibender Betätigungsweg der Bremsvorrichtung sichergestellt. Dieser das Lüftspiel einschließende Betätigungsweg wird von der Betätigungseinrichtung durch Einschalten ihres Elektro-Betriebsmotors überwunden. Da zur Bremsbetätigung nur ein Motor aktiviert werden muß, vereinfacht sich die Steuerung der Bremsvorrichtung und erhöht sich deren Funktionssicherheit. Weiterer Vorteil der erfindungsgemäßen Bremsvorrichtung ist, daß sie sich im Fehlerfall ihrer Betätigungseinrichtung mit der Nachstelleinrichtung lösen läßt. Mit Fehlerfall ist ein Ausfall des Betätigungsmotors oder seiner Stromversorgung oder auch ein mechanischer Defekt der Betätigungseinrichtung, der diese blockiert, gemeint. Zusätzlich hat die Erfindung den Vorteil, daß sich mit dem Nachstellmotor und der Nachstelleinrichtung im Fehlerfall der Betätigungseinrichtung eine Bremskraft erzeugen und das Fahrzeug abbremsen läßt, auch wenn diese Bremskraft abhängig von der Auslegung des Nachstellmotors und der Nachstelleinrichtung geringer als eine mit der Betätigungseinrichtung erzielbare Maximalbremskraft ist.

Die Unteransprüche betreffen vorteilhafte Ausgestaltungen und Weiterbildungen der im Anspruch 1 angegebenen Erfindung.

### Zeichnung

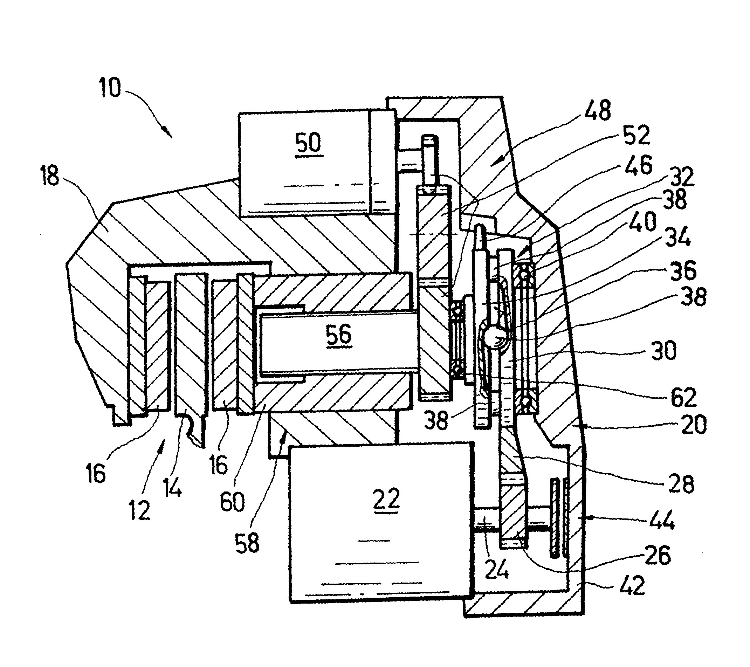

Die Erfindung wird nachfolgend anhand eines in der Zeichnung dargestellten Ausführungsbeispiels näher erläutert. Die einzige Figur zeigt eine erfindungsgemäße Bremsvorrichtung in schematisierter Darstellung.

### Beschreibung des Ausführungsbeispiels

Die erfindungsgemäße, in der Zeichnung dargestellte Bremsvorrichtung 10 weist eine Scheibenbremse 12 mit einer Bremsscheibe 14 als Bremskörper, von der in der Zeichnung nur ein Bruchstück im Umfangsbereich dargestellt ist, und mit zwei Bremsbacken 16 mit Bremsbelägen auf. Die Bremsbacken 16 sind in ansich bekannter Weise in einem Schwimmsattel 18 aufgenommen.

Die Bremsvorrichtung 10 weist eine Betätigungseinrichtung 20 auf, die mit einem Elektro-Betriebsmotor 22 antreibbar ist: Auf einer Antriebswelle 24 des Betriebsmotors 22 ist ein Ritzel 26 drehfest angebracht. Dieses kämmt mit einem Zahnradsegment 28, also mit einem Zahnkranz, der sich nur über einen begrenzten Winkelbereich erstreckt. Das Zahnradsegment 28 ist fest am Umfang einer ersten Rampenscheibe 30 eines Wälzkörperrampenmechanismus 32 angebracht. Der Wälzkörperrampenmechanismus 32 weist zwei kreisrunde, gleichachsig parallel mit etwas Abstand voneinander angeordnete Rampenscheiben 30, 34 auf. Diese weisen in einander zugewandten Stirnseiten Rampenbahnen 36 in Form von Nuten, die im Umfangsbereich der Rampenscheiben 32, 34 in Umfangsrichtung über einen begrenzten Umfangswinkel verlaufen, auf. Die Rampenbahnen 36 haben eine Steigung, d. h. ihre Tiefe ändert sich stetig über den Umfangswinkel. Die Rampenbahnen 36 bilden somit kurze Abschnitte von Schraubenbahnen. In den Rampenbahnen 36 sind Kugeln 38 oder Walzkörper aufgenommen, die die Rampenscheiben 30, 34 auf Abstand voneinander halten. Durch Verdrehen der beiden Rampenscheiben 30, 34 gegeneinander läßt sich ihr Abstand voneinander verändern. Der Aufbau des Wälzkörperrampenmechanismus 30 (im dargestellten Ausführungsbeispiel ist es ein Kugelrampenmechanismus) ist einem Axialkugellager ähnlich mit dem Unterschied, daß die Rampenbahnen für die Wälzkörper eine Steigung aufweisen und nur über einen begrenzten Umfangswinkel verlaufen. Die Wälzkörper können beispielsweise auch konisch sein. Ein Querschnitt der Rampenbahnen ist komplementär zu den Walzkörpern ausgebildet.

Die zweite Rampenscheibe 34 weist eine radial abstehende Nase 46 auf, die in Eingriff mit dem Gehäuse 42 steht und ein Mitdrehen der zweiten Rampenscheibe 34 mit der ersten Rampenscheibe 30 verhindert.

Der Kugelrampenmechanismus 32 hat den Vorteil, daß er durch die zwischen seinen Rampenscheiben 30, 34 wälzenden Kugeln 38 sehr leichtgängig ist, also mit hohem Wirkungsgrad arbeitet. Seine erste Rampenscheibe 30 stützt sich über ein Axialkugellager 40 gegen ein fest am Schwimmsattel 18 angebrachtes Gehäuse 42 ab. Durch rotierenden Antrieb der ersten Rampenscheibe 30 mittels des Betriebsmotors 22 vergrößert sich der Abstand zwischen den beiden Rampenscheiben 30, 34, d. h. die zweite Rampenscheibe 34 wird von der ersten Rampenscheibe 30 weggedrückt, der Kugelrampenmechanismus 32 setzt eine rotierende Antriebsbewegung in eine Linearbewegung um. Die zweite Rampenscheibe 34 drückt die in der Zeichnung rechts dargestellte Bremsbacke 16 gegen die Bremsscheibe 14 und über eine Reaktionskraft drückt der Schwimmsattel 18 in an sich bekannter Weise die andere Bremsbacke 16 gegen die andere Seite der Bremsscheibe 14, so daß eine Bremskraft erzeugt wird. Zum Lösen der Scheibenbremse 12 wird der Betriebsmotor 22 mit entgegengesetzter Drehrichtung betrieben.

Um eine aufgebrachte Bremskraft auch ohne Bestromen des Betriebsmotors 22 aufrechterhalten zu können, ist an der Antriebswelle 24 des Betriebsmotors 22 eine elektromagnetisch betätigbare Bremse 42 angebracht, wie sie dem Fachmann in vielfältigen Ausführungsformen an sich bekannt ist. Die Bremse 42 kann sowohl in ihrer gelösten als auch in ihrer Bremsstellung selbsthaltend (bistabil) sein, sie wird lediglich magnetisch zwischen diesen beiden Stellungen umgeschaltet. Mit ihr läßt sich über die Antriebswelle 24 die Betätigungseinrichtung 20 blockieren, so daß eine aufgebrachte Bremskraft erhalten bleibt. Dadurch ist die erfindungsgemäße Bremsvorrichtung 10 auch als Feststellbremse verwendbar, ohne zum Halten der Bremskraft Strom zu benötigen (bei bistabiler Ausführungsvariante).

Auch beim herkömmlichen Bremsen während der Fahrt, also bei Verwendung der erfindungsgemäßen Bremsvorrichtung 10 als Betriebsbremse, kann die Bremse 42 in ihre Bremsstellung umgeschaltet werden, so daß eine aufgebrachte Bremskraft erhalten bleibt, und der Betriebsmotor 22 abgeschaltet werden, wenn und solange eine Bremsung mit konstanter Bremskraft erfolgt. Dies hat den Vorteil, daß ein Strombordnetz eines mit der erfindungsgemäßen Bremsvorrichtung 10 ausgerüsteten Fahrzeugs und ebenso der Betriebsmotor 22 der Bremsvorrichtung 10, letzterer insbesondere thermisch, entlastet werden. Das Umschalten der elektromagnetisch betätigbaren Bremse 42 und das Abschalten des Betriebsmotors 22 erfolgen vorzugsweise, wenn Bremskraftänderungen während eines festgelegten Zeitabschnitts innerhalb eines vorgegebenen Bereichs liegen. Dieser Bereich ist so gewählt, daß die Bremskraft als konstant angenommen werden kann.

Über- oder Unterschreitet die Bremskraft den vorgegebenen Bereich, wird die Bremse 42 in ihre gelöste Stellung umgeschaltet und die Bremsvorrichtung 10 mit dem Bretriebsmotor 22 stärker oder schwächer betätigt. Eine konstante Bremskraft über einen Zeitabschnitt tritt z. B. bei einer Pankikbremsung oder während einer Blockierschutz-, Antriebsschlupf- oder Fahrdynamikregelung auf.

Zum Einstellen eines Lüftspiels, also eines Gesamtspalts zwischen den Bremsbacken 16 und der Bremsscheibe 14, weist die erfindungsgemäße Bremsvorrichtung 10 eine Nachstelleinrichtung 48 auf, die mit einem Elektro-Nachstellmotor 50 antreibbar ist. Der Nachstellmotor 50 ist an eine von der Stromversorgung des Betriebsmotors 22 unabhängige Stromversorgung angeschlossen. Mit ihm ist über ein Zahnradgetriebe 52 eine Spindel 56 eines Spindeltriebs 58 verdrehbar. Dadurch verschiebt sich eine Spindelmutter 60 axial auf der Spindel 56. Die Spindel 56 stützt sich über ein Axialkugellager 62 gegen die zweite Rampenscheibe 34 ab und die Spindelmutter 60 drückt gegen die in der Zeichnung rechts dargestellte Bremsbacke 16. Der Kugelrampenmechanismus 32 drückt also über den Spindeltrieb 58 die Bremsbacke 16 gegen die Bremsscheibe 12. Der Abstand zwischen der zweiten Rampenscheibe 34 und der Bremsbacke 16 und damit das Lüftspiel läßt sich durch Verstellen des Spindeltriebs 58 einstellen.

Zum Einstellen des Lüftspiels und zum Nachstellen des Lüftspiels bei Bremsbelagsabnutzung werden die beiden Bremsbacken 16 bei rückgestellter Betätigungseinrichtung 20 mit der Nachstelleinrichtung 48 in Anlage an der Bremsscheibe 14 gebracht. Dies ist feststellbar beispielsweise anhand der stark ansteigenden Stromaufnahme des Nachstellmotors 50, sobald die Bremsbacken 16 an der Bremsscheibe 14 zur Anlage kommen und eine weitere Verstellung einen sprungartigen Kraftanstieg erfordert. Nach Anlage an der Bremsscheibe 14 werden die Bremsbacken 16 mit der Nachstelleinrichtung 58 um einen bestimmten Weg, nämlich um das Lüftspiel, zurückgestellt. Dies kann durch Betrieb des Nachstellmotors 50 in Rückstellrichtung während einer festgelegten Zeitdauer erfolgen.

Weiterhin ist es möglich, die Bremsvorrichtung 10 mit der Nachstelleinrichtung 48 im Fehlerfall lösen, d. h. wenn der Betriebsmotor 22 oder dessen Stromversorgung ausfallen, wenn die Betätigungseinrichtung 20 beispielsweise infolge eines mechanischen Defekts blockiert ist oder wenn sich die Feststellbremse 44 nicht lösen läßt. Des weiteren läßt sich mit der Nachstelleinrichtung 48 im Fehlerfall eine Bremskraft an der Scheibenbremse 12 aufbauen, so daß die Bremsvorrichtung 10 in jedem Fall, wenn auch eventuell mit verringerter Maximalbremskraft, betätigbar ist.

## Patentansprüche

1. Bremsvorrichtung (10) für ein Fahrzeug, mit einer Betätigungseinrichtung (20), die einen Elektro-Betriebsmotor (22) aufweist und mit der ein Bremsbelag (16) an einen Bremskörper (14) andrückbar ist, sowie mit einer Nachstelleinrichtung (48), die einen von einem Elektro-Nachstellmotor (50) antreibbaren Spindeltrieb (58) aufweist und mit der ein Lüftspiel zwischen dem Bremsbelag (16) und dem Bremskörper (14) einstellbar ist,
**dadurch gekennzeichnet,**
**daß** die Betätigungseinrichtung (20) einen Wälzkörperrampenmechanismus (32) aufweist, der vom Elektro-Betriebsmotor (22) antreibbar ist und eine begrenzte Drehbewegung in eine Linearbewegung zum Überwinden des Lüftspiels und zum Andrücken des Bremsbelags (16) an den Bremskörper (14) umsetzt, und daß mit dem Elektro-Nachstellmotor (50) eine Spindel (56) des zwischen dem Wälzkörperrampenmechanismus (32) und dem Bremsbelag (16) angeordneten Spindeltriebs (58) zur Einstellung des Lüftspiels antreibbar ist.

2. Bremsvorrichtung nach Anspruch 1, **dadurch gekennzeichnet, daß** die Betätigungseinrichtung (20) mit einer Feststellbremseinrichtung (44) festsetzbar ist.

3. Bremsvorrichtung nach Anspruch 2, **dadurch gekennzeichnet, daß** die Feststellbremseinrichtung (44) sowohl in einer gelösten Stellung als auch in einer Bremsstellung selbsthaltend ist, und daß die Feststellbremseinrichtung (44) magnetisch von der gelösten Stellung in die Bremsstellung und zurück umschaltbar ist.

4. Verfahren zum Einstellen des Lüftspiels einer Bremsvorrichtung nach Anspruch 1, **dadurch gekennzeichnet, daß** bei gelöster Bremsvorrichtung (10) der Nachstellmotor (50) eingeschaltet wird und die Nachstelleinrichtung (48) antreibt, bis der Bremsbelag (16) am Bremskörper (14) anliegt, und daß der Nachstellmotor (50) anschließend eine festgelegte Rückdrehbewegung ausführt.

5. Verfahren zum Betrieb einer Bremsvorrichtung nach Anspruch 2 oder 3, **dadurch gekennzeichnet, daß** zum Halten einer konstanten, mit dem Betriebsmotor (22) aufgebrachten Bremskraft die Feststellbremseinrichtung (44) in ihre Bremsstellung gebracht und der Betriebsmotor (22) abgestellt wird.

## Claims

1. Braking appliance (10) for a vehicle, with an actuating device (20), which has an electric operating motor (22) and by means of which a brake pad (16) can be pressed against a braking body (14), and with an adjusting device (48), which has a spindle drive (58), which can be driven by an electric adjusting motor (50) and by means of which a release clearance between the brake pad (16) and the braking body (14) can be adjusted, **characterized in that** the actuating device (20) has a rolling-element ramp mechanism (32), which can be driven by the electric operating motor (22) and converts a limited rotary motion into a linear motion to bridge the release clearance and press the brake pad (16) against the braking body (14), and **in that** a spindle (56) of the spindle drive (58) arranged between the rolling-element ramp mechanism (32) and the brake pad (16) can be driven by means of the electric adjusting motor (50) so as to adjust the release clearance.

2. Braking appliance according to Claim 1, **characterized in that** the actuating device (20) can be fixed by means of a parking-brake device (44).

3. Braking appliance according to Claim 2, **characterized in that** the parking-brake device (44) is self-locking both in a released position and in a braking position, and **in that** the parking-brake device (44) can be switched magnetically from the released position to the braking position and back.

4. Method for adjusting the release clearance of a braking appliance according to Claim 1, **characterized in that** the adjusting motor (50) is switched on with the braking appliance (10) released and drives the adjusting device (48) until the brake lining (16) is resting on the braking body (14), and **in that** the adjusting motor (50) then performs a defined rotary return motion.

5. Method for operating a braking appliance according to Claim 2 or 3, **characterized in that**, to maintain a constant braking force applied by means of the operating motor (22), the parking-brake device (44) is moved into its braking position and the operating motor (22) is switched off.

## Revendications

1. Système de freinage (10) pour un véhicule comprenant :
- un dispositif d'actionnement (20), qui présente un moteur électrique de service (22) et qui peut appliquer une garniture de frein (16) sur un corps de frein (14),
- un dispositif de rattrapage (48) qui présente un entraîneur (58) à broche filetée que peut faire tourner un moteur de rattrapage (50) et qui peut régler un jeu d'air entre la garniture de frein (16) et le corps de frein (14),
**caractérisé en ce que**
- le dispositif d'actionnement (20) comporte un mécanisme à rampes et corps roulants (32) qui peut être entraîné par le moteur électrique de service (22) et qui transforme un mouvement limité de rotation en un mouvement linéaire pour franchir le jeu d'air et appliquer la garniture de frein (16) en pression sur le corps de frein (14), et
- le moteur électrique de rattrapage (50), pour régler le jeu d'air, peut entraîner une broche filetée (56) de l'entraînement à broche (58) monté entre le mécanisme à rampes et corps roulants (32) et la garniture de frein (16).

2. Système de freinage selon la revendication 1,
**caractérisé en ce que**
le dispositif d'actionnement (20) peut être immobilisé par un dispositif de freinage de stationnement (44).

3. Système de freinage selon la revendication 2,
**caractérisé en ce que**
le dispositif de freinage de stationnement (44) est autostable en position desserrée aussi bien qu'en position de freinage, et il peut être commuté magnétiquement pour passer de la position desserrée à la position de freinage.

4. Procédé pour régler le jeu d'air d'un système de freinage selon la revendication 1,
**caractérisé en ce que**
le système de freinage (10) étant en position desserrée, le moteur de rattrapage (50) est connecté et entraîne le dispositif de rattrapage (48) jusqu'à ce que la garniture de frein (16) vienne s'appliquer sur le corps de frein (14), puis le moteur de rattrapage (50) effectue, en sens inverse, une rotation déterminée.

5. Procédé pour faire fonctionner un système de freinage selon la revendication 2 ou 3,
**caractérisé en ce que**
pour maintenir constante une force de serrage qui a été appliquée par le moteur de service (22), le dispositif de freinage de stationnement (44) est amené à sa position de freinage et le moteur de service (22) est coupé.
